# EUROPEAN PATENT APPLICATION

(11) **EP 4 068 052 A1**
(43) Date of publication of application: **05.10.2022**
(21) Application number: 20907319.6
(22) Date of filing: 27.12.2020
(51) Int. Cl.: G06F 3/01

(54) **CONTROL METHOD AND DEVICE FOR AUDIO PLAYBACK**

(30) Priority: 26.12.2019 CN 201911368976
(71) Applicant: Huawei Technologies Co., Ltd., Shenzhen, Guangdong 518129 (CN)
(72) Inventor: RONG, Zhichao, Shenzhen, Guangdong 518129 (CN); LUO, Jiajin, Shenzhen, Guangdong 518129 (CN); LI, Xu, Shenzhen, Guangdong 518129 (CN); LV, Yibo, Shenzhen, Guangdong 518129 (CN)
(74) Representative: Pfenning, Meinig & Partner mbB
(86) International application number: PCT/CN2020/139782
(87) International publication number: WO 2021/129848

(57) **Abstract**

A sound playing control method and apparatus are provided, to more conveniently control sound playing of an electronic device. The control apparatus includes a sensing sensor, configured to sense a gesture signal; and a processor, configured to recognize a gesture based on the gesture signal, and configured to determine a control instruction associated with the gesture, where the control instruction indicates a sound play operation. The control instruction may be further sent to a sound playing device; or the sound play operation indicated by the control instruction is executed.

## Description

### CROSS-REFERENCE TO RELATED APPLICATION

This application claims priority to Chinese Patent Application No. 201911368976.3, filed with the China National Intellectual Property Administration on December 26, 2019 and entitled "SOUND PLAYING CONTROL METHOD AND APPARATUS", which is incorporated herein by reference in its entirety.

### TECHNICAL FIELD

Embodiments of this application relate to the field of communication technologies, and in particular, to a sound playing control method and apparatus.

### BACKGROUND

Usually, a sound playing device on a mobile terminal such as a music player or a mobile phone does not have a control function. Sound playing still needs to be controlled on the mobile terminal. In this case, a user needs to take out the mobile terminal and operate on the mobile terminal for sound playing control. This is very inconvenient.

In an existing possible implementation, some sound playing apparatuses may physically wake up a voice assistant, and control the sound playing device with voice input. However, the voice input is very inconvenient in many scenarios, and is not applicable to people with a speech impediment. In another implementation, some sound playing apparatuses provide physical touch control, and a user needs to operate on a button without seeing the button. In this case, misoperation easily occurs, and a posture is uncomfortable. In particular, the existing devices are not suitable for people with disabilities.

In conclusion, the existing sound playing control method needs to be further improved.

### SUMMARY

Embodiments of this application provide a sound playing control method and apparatus, to more conveniently control sound playing.

According to a first aspect, a sound playing control method is provided. The method includes: sensing a gesture signal; recognizing a gesture based on the gesture signal; and determining a control instruction associated with the gesture, where the control instruction indicates a sound play operation. According to the control method provided in this embodiment of this application, sound playing control can meet more application scenarios. A user does not need to touch an electronic device, a sound playing device or a component, and the user does not need to use voice input. Instead, the user can generate a control instruction by using a gesture, to control sound playing. More application scenarios are supported. For example, for some people with language disabilities, when it is inconvenient to input a control instruction by using voice, a gesture may be used to input a control instruction. When a control instruction is input by using a light sensor, there are many environmental restrictions of the light sensor, and the light sensor is easily interfered with by an ambient light signal. However, when a control instruction is input by using a gesture, environmental interference can be avoided, and playing control is more convenient and accurate. According to the method, a physical touch for inputting a control instruction is not needed. The method of inputting a control instruction by using a gesture can avoid inconvenience resulting from a small size of a headset. The operation is more convenient.

In a possible design, the gesture signal may include a sound wave signal. Sensing the gesture signal may be based on an ultrasonic Doppler effect.

In a possible design, the recognizing a gesture based on the gesture signal may be implemented by using the following steps: converting the sound wave signal into an electrical signal; and recognizing the gesture based on the electrical signal.

In a possible design, the method further includes: sending the control instruction to a sound playing device; or executing the sound play operation indicated by the control instruction.

In a possible design, the gesture may be recognized in the following manner: performing feature classification and grouping. In a classification process, an identity or category of each feature is determined, for example, a feature of a finger, a palm, an arm, or another object. Once classified, a plurality of features can be grouped into corresponding feature groups. Locations of features in a feature group may be adjacent to each other, or features in a feature group may come from a same finger. Optionally, a grouping process may include filtering. A part of the features that are not of a gesture event are filtered out by filtering. Filtering improves accuracy of gesture recognition. A key parameter of a feature group is determined. The key parameter may include but is not limited to a distance between features, a centroid of the features, a feature rotation, a state transition, a feature movement rate, a feature movement direction, and the like. The key parameter of the feature group may be determined by a recognition algorithm. The unique gesture can be recognized after the foregoing process.

According to a second aspect, a control apparatus is provided. The control apparatus includes a sensing sensor, configured to sense a gesture signal; and a processor, configured to recognize a gesture based on the gesture signal, and configured to determine a control instruction associated with the gesture, where the control instruction indicates a sound play operation. With the control apparatus provided in this embodiment of this application, sound playing control can meet more application scenarios. A user does not need to touch an electronic device, a sound playing device or a component, and the user does not need to use voice input. Instead, the user can generate a control instruction by using a gesture, to control sound playing. More application scenarios are supported. For example, for some people with language disabilities, when it is inconvenient to input a control instruction by using voice, a gesture may be used to input a control instruction. When a control instruction is input by using a light sensor, there are many environmental restrictions of the light sensor, and the light sensor is easily interfered with by an ambient light signal. However, when a control instruction is input by using a gesture, environmental interference can be avoided, and playing control is more convenient and accurate. According to the method, a physical touch for inputting a control instruction is not needed. The method of inputting a control instruction by using a gesture can avoid inconvenience resulting from a small size of a headset. The operation is more convenient.

In a possible design, the control apparatus may further include a memory. The memory is connected to the processor, or the processor includes the memory. The memory is configured to store a program, instructions, or data invoked by the processor. When executing the instructions or data stored in the memory, the processor may implement the method described in the first aspect or any possible design.

In a possible design, the gesture signal may include a sound wave signal. The sensing sensor may be specifically configured to sense the gesture signal based on an ultrasonic Doppler effect.

In a possible design, when recognizing the gesture based on the gesture signal, the processor is specifically configured to convert the sound wave signal into an electrical signal, and recognize the gesture based on the electrical signal.

In a possible design, the processor may be further configured to send the control instruction to a sound playing device; or the processor may be further configured to execute the sound play operation indicated by the control instruction. The processor may send the control instruction in a wired or wireless manner.

For example, the control apparatus is a headset, the headset sends the control instruction to a mobile phone player, and the mobile phone player executes the instruction. Alternatively, the headset executes the instruction (for example, to turn the sound up or down).

In a possible design, the processor may recognize the gesture in the following manner: The processor performs feature classification and grouping. In a classification process, an identity or category of each feature is determined, for example, a feature of a finger, palm, arm, or other object. Once classified, a plurality of features can be grouped into corresponding feature groups. Locations of features in a feature group may be adjacent to each other, or features in a feature group may come from a same finger. Optionally, a grouping process may include filtering. A part of the features that are not of a gesture event are filtered out by filtering. Filtering improves accuracy of gesture recognition. The processor determines a key parameter of a feature group. The key parameter may include but is not limited to a distance between features, a centroid of the features, a feature rotation, a state transition, a feature movement rate, a feature movement direction, and the like. The key parameter of the feature group may be determined by a recognition algorithm. The processor can recognize the unique gesture after the foregoing process.

According to a third aspect, a control apparatus is provided. The apparatus includes a recognition module, configured to recognize a gesture based on a gesture signal; and a determining module, configured to determine a control instruction associated with the gesture, where the control instruction indicates a sound play operation. With the control apparatus provided in this embodiment of this application, sound playing control can meet more application scenarios. A user does not need to touch an electronic device, a sound playing device or a component, and the user does not need to use voice input. Instead, the user can generate a control instruction by using a gesture, to control sound playing. More application scenarios are supported. For example, for some people with language disabilities, when it is inconvenient to input a control instruction by using voice, a gesture may be used to input a control instruction. When a control instruction is input by using a light sensor, there are many environmental restrictions of the light sensor, and the light sensor is easily interfered with by an ambient light signal. However, when a control instruction is input by using a gesture, environmental interference can be avoided, and playing control is more convenient and accurate. According to the method, a physical touch for inputting a control instruction is not needed. The method of inputting a control instruction by using a gesture can avoid inconvenience resulting from a small size of a headset. The operation is more convenient.

In a possible design, the gesture signal includes a sound wave signal.

In a possible design, when recognizing the gesture based on the gesture signal, the recognition module is specifically configured to convert the sound wave signal into an electrical signal, and recognize the gesture based on the electrical signal.

In a possible design, the apparatus further includes a sending module. The sending module is configured to send the control instruction to a sound playing device. Alternatively, the apparatus further includes an execution module, where the execution module is configured to execute the sound play operation indicated by the control instruction. The sending module may send the control instruction in a wired or wireless manner.

For example, the control apparatus is a headset, the headset sends the control instruction to a mobile phone player, and the mobile phone player executes the instruction. Alternatively, the headset executes the instruction (for example, to turn the sound up or down).

In a possible design, the recognition module may recognize the gesture in the following manner: performing feature classification and grouping. In a classification process, an identity or category of each feature is determined, for example, a feature of a finger, a palm, an arm, or another object. Once classified, a plurality of features can be grouped into corresponding feature groups. Locations of features in a feature group may be adjacent to each other or may come from a same finger. Optionally, a grouping process may include filtering. Apart of the features that are not of a gesture event are filtered out by filtering. Filtering improves accuracy of gesture recognition. The recognition module determines a key parameter of a feature group. The key parameter includes a distance between features, a centroid of the features, a feature rotation, a state transition, a feature movement rate, a feature movement direction, and the like. The key parameter of the feature group may be determined by a recognition algorithm. The recognition module can recognize the unique gesture after the foregoing process.

With reference to the method provided in the first aspect, the apparatus provided in the second aspect, and the apparatus provided in the third aspect, the following provides several optional association relationships between gestures and control instructions.

In a possible design, when the gesture is clenching a fist or bringing a thumb closer to another finger, the control instruction may be to enable playing correspondingly. The another finger includes one or more of an index finger, a middle finger, a ring finger, or a little finger.

In a possible design, when the gesture is opening a fist or bringing a thumb away from another finger, the control instruction may be to stop playing correspondingly. The another finger includes one or more of an index finger, a middle finger, a ring finger, or a little finger.

In a possible design, when the gesture is any one of moving a finger upward, moving a finger forward, moving a finger leftward, or a gesture simulating clockwise rotating of a physical knob, the control instruction may be to increase volume correspondingly. The finger is any one or more of fingers.

In a possible design, when the gesture is any one of moving a finger downward, moving a finger backward, moving a finger rightward, or a gesture simulating counterclockwise rotating of a physical knob, the control instruction may be to decrease volume correspondingly. The finger is any one or more of fingers.

In a possible design, when the gesture is swinging a forearm away from a body, the control instruction may be to switch to play a next sound file correspondingly.

In a possible design, when the gesture is swinging a forearm closer to a body, the control instruction may be to switch to play a previous sound file correspondingly.

In a possible design, when the gesture is bringing a left hand closer to or away from a left ear, the control instruction may be to adjust volume of a left headset correspondingly.

In a possible design, when the gesture is bringing a right hand closer to or away from a right ear, the control instruction may be to adjust volume of a right headset correspondingly.

According to a fourth aspect, a chip system is provided. The chip system includes a processor, may further include a sensing sensor, and optionally may further include a memory. The chip is configured to implement the method according to any one of the first aspect or the possible designs of the first aspect. The chip system may include a chip, or may include a chip and another discrete device. For an effect of the chip system, refer to an effect that can be achieved by the method according to the first aspect and each possible design. Details are not described again.

According to a fifth aspect, a computer program product including instructions is provided. When the instructions are run on a computer, the computer is enabled to perform the method according to any one of the first aspect and the possible designs of the first aspect. For an effect of the computer program product, refer to an effect that can be achieved by the method according to the first aspect and each possible design. Details are not described again.

According to a sixth aspect, an embodiment of this application further provides a computer-readable storage medium including instructions. When the instructions are run on a computer, the computer is enabled to perform the method according to any one of the first aspect or the possible designs of the first aspect. For an effect of the computer-readable storage medium, refer to an effect that can be achieved by the method according to the first aspect and each possible design. Details are not described again.

### BRIEF DESCRIPTION OF DRAWINGS

FIG. 1 is a schematic diagram 1 of a structure of a control apparatus according to an embodiment of this application;
FIG. 2 is a schematic diagram 1 of an architecture of a control apparatus and a sound playing device according to an embodiment of this application;
FIG. 3a is a schematic diagram 2 of an architecture of a control apparatus and a sound playing device according to an embodiment of this application;
FIG. 3b is a schematic diagram 3 of an architecture of a control apparatus and a sound playing device according to an embodiment of this application;
FIG. 4 is a schematic diagram of a sound playing control method by a control apparatus according to an embodiment of this application;
FIG. 5 is a schematic diagram 2 of a structure of a control apparatus according to an embodiment of this application;
FIG. 6 is a schematic diagram 1 of gestures according to an embodiment of this application;
FIG. 7 is a schematic diagram 2 of gestures according to an embodiment of this application;
FIG. 8 is a schematic diagram 3 of a gesture according to an embodiment of this application;
FIG. 9 is a schematic diagram 4 of a gesture according to an embodiment of this application;
FIG. 10 is a schematic diagram 5 of a gesture according to an embodiment of this application;
FIG. 11 is a schematic diagram 6 of a gesture according to an embodiment of this application;
FIG. 12 is a schematic diagram 7 of a gesture according to an embodiment of this application;
FIG. 13 is a schematic diagram 8 of a gesture according to an embodiment of this application; and
FIG. 14 is a schematic flowchart of a sound playing control method according to an embodiment of this application.

### DESCRIPTION OF EMBODIMENTS

Embodiments of this application provide a sound playing control method and apparatus, so as to more conveniently control sound playing. The method and the apparatus are based on a same or similar technical concept. Because a problem-resolving principle of the method is similar to that of the apparatus, mutual reference may be made to implementations of the apparatus and the method. Repeated parts are not described in detail.

In descriptions of the embodiments of this application, the term "and/or" describes an association relationship between associated objects and indicates that three relationships may exist. For example, A and/or B may indicate the following three cases: Only A exists, both A and B exist, and only B exists. The character "/" generally indicates an "or" relationship between the associated objects. In this application, "at least one" means one or more, and "a plurality of" means two or more.

In addition, it should be understood that, in the descriptions of this application, the terms such as "first", "second", and "third" are merely used for differentiation and description, but cannot be understood as an indication or implication of relative importance or an indication or implication of an order. Reference to "an embodiment", "some embodiments", or the like described in this specification means that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment, instead, they mean "one or more but not all of the embodiments", unless otherwise specifically emphasized. The terms "include", "contain", "have", and their variants all mean "include but are not limited to", unless otherwise specifically emphasized.

The following describes in detail embodiments of this application with reference to accompanying drawings.

An embodiment of this application provides a control apparatus. The control apparatus may perform a sound playing control method. The control apparatus may include one or more modules, and each of the modules is configured to perform a corresponding method/operation/step/action. The modules each may be a hardware circuit, may be software, or may be a combination of a hardware circuit and software. The modules may be integrated into one processor, each of the modules may exist alone physically, or two or more modules may be integrated into one module.

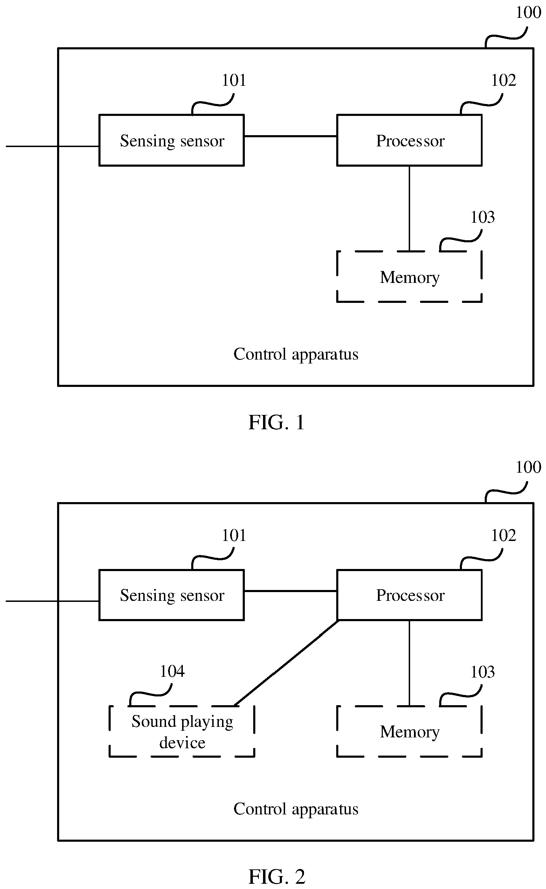

If the modules in the control apparatus are implemented in a form of hardware, for example, as shown in FIG. 1, the control apparatus 100 may include a sensing sensor 101 and a processor 102. The control apparatus 100 may further include a memory 103. Each module may be configured to implement a corresponding step, which is specifically described below.

The sensing sensor 101 may be configured to sense a gesture signal. The sensing sensor 101 may be, for example, a Doppler effect-based acoustic wave sensor, a WiFi-based sensor, a Bluetooth-based sensor, a millimeter wave-based sensor, or a visible light-based sensor. The sensing sensor 101 may alternatively be a camera. The gesture signal is obtained by using the camera.

The processor 102 may be configured to recognize a gesture based on the gesture signal sensed by the sensor 101, and determine a control instruction associated with the gesture.

The control instruction indicates a sound play operation. The sound play operation is a sound playing-related operation that is executed by a sound playing device. For example, the operation related to sound playing may be to enable sound playing, to disable sound playing, to increase volume, to decrease volume, to play a previous sound file (for example, a song file), or to play a next sound file.

The control apparatus 100 controls the sound playing device based on the control instruction associated with the recognized gesture, and the sound playing device executes a corresponding sound play operation based on the control instruction. The sound playing device may be a speaker, a music player, or the like.

A possible structural relationship between the sound playing device and the control apparatus 100 is described below.

(1) As shown in FIG. 2, the control apparatus 100 may include a sound playing device 104.

Optionally, the sound playing device 104 is connected to the processor 102, or the sound playing device 104, the sensing sensor 101, the processor 102, or the memory 103 are connected by using a bus.

The control apparatus 100 may be a headset, and may be a wired headset or a wireless headset. The sound playing device 104 is a speaker in the headset. For example, the headset may adjust playing volume of the speaker based on the control instruction associated with the gesture.

Certainly, the control apparatus 100 may alternatively be an apparatus of another type, for example, a watch, a sports band, or glasses.

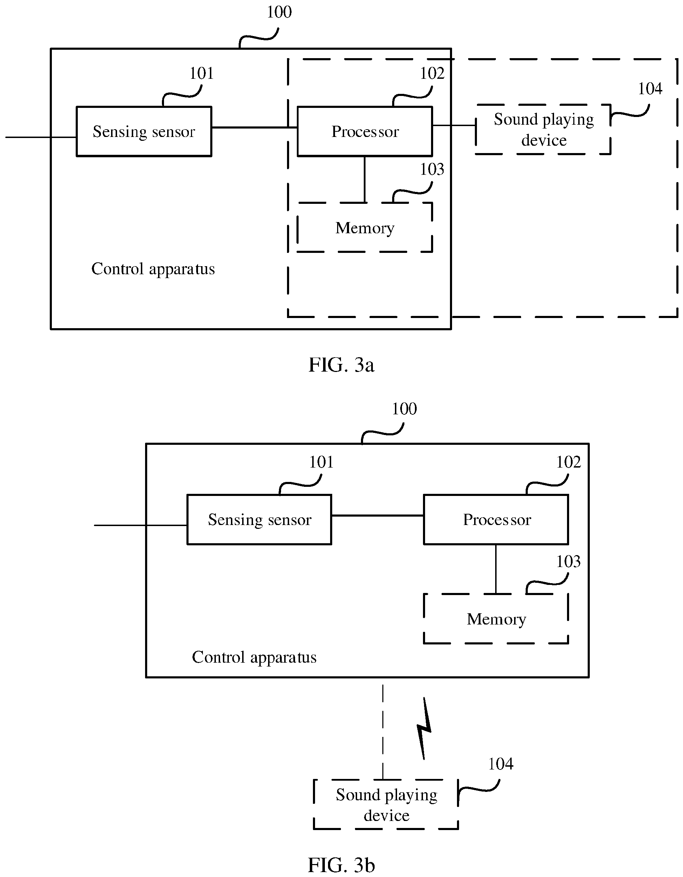

(2) As shown in FIG. 3a, the control apparatus 100 is coupled to the sound playing device 104. Apart or all of the modules in the control apparatus 100 may be integrated in the sound playing device 104. For example, the processor 102 and the memory 103 are in the sound playing device.

In a possible application scenario, the sensing sensor 101 is in a headset, and the sound playing device 104, the processor 102, and the memory 103 are integrated into a mobile phone. The sensing sensor 101 in the headset senses the gesture signal, and transmits the gesture signal to the processor 102 in the mobile phone to recognize the gesture. The processor 102 determines, based on the recognized gesture, the control instruction associated with the gesture, and controls, based on the control instruction, the sound playing device 104 to execute the operation related to sound playing.

(3) As shown in FIG. 3b, the control apparatus 100 may alternatively be connected to the sound playing device 104. A connection manner may be a wired or wireless connection manner, for example, being connected by using a live wire, a universal serial bus (universal serial bus, USB), Bluetooth, or a radio frequency (radio frequency, RF).

For example, the sound playing device 104 may be a communication device such as a mobile phone, a music player, a personal computer (personal computer, PC), or a tablet computer. The control apparatus 100 controls the music player or the mobile phone to execute a sound play operation based on the control instruction associated with the recognized gesture.

The memory 103 is configured to store a group of programs. When the processor 102 recognizes the gesture based on the gesture signal, the processor 102 may invoke a program stored in the memory 103 to recognize the gesture.

The control instruction may be further used to control a component or a user interface (user interface, UI) component on the electronic device, for example, a button, a scroll wheel, or a sliding block.

The following describes in detail some optional implementations of a method for controlling sound playing by the control apparatus 100.

The sensing sensor 101 may sense approaching, moving away, a speed, and a distance of an object, and various gestures. The gesture signal in embodiments of this application is not limited to various gestures made by a human hand, and may be a gesture implemented by moving another object. For example, the another object is a pen, and a gesture is implemented by approaching or moving away the pen, or a gesture may be implemented by rotating the pen, for example, different gestures are implemented by clockwisely rotating the pen and counterclockwisely rotating the pen.

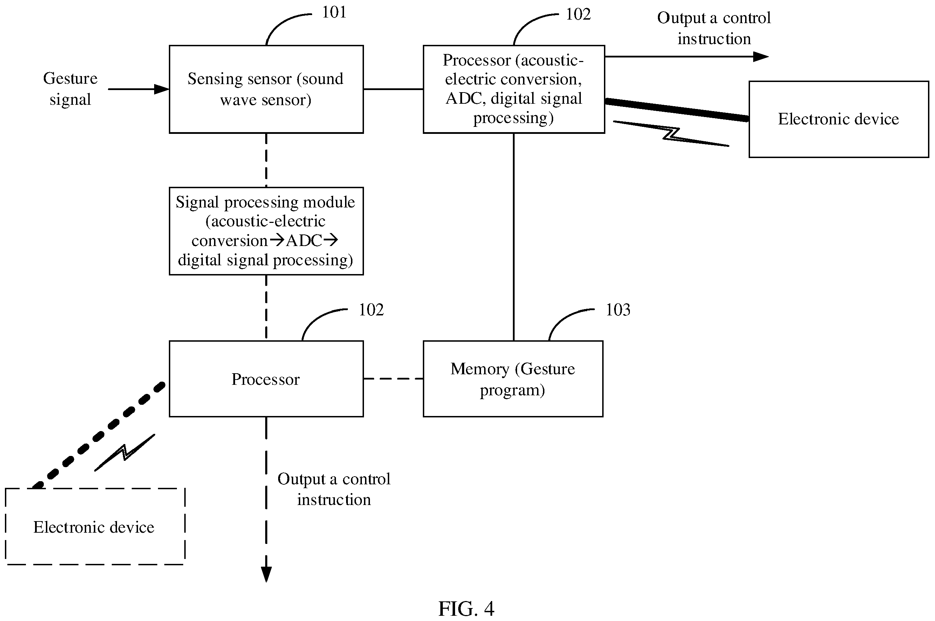

Refer to a scenario in FIG. 4. An example in which the sensing sensor 101 is a Doppler effect-based acoustic wave sensor is used to further describe the control apparatus and the sound playing control method in detail.

The sensing sensor 101 (sound wave sensor) recognizes a gesture signal. The gesture signal may be a sound wave signal. The sensing sensor 101 may alternatively be referred to as a sound wave transceiver apparatus or a sound wave transceiver. The sensing sensor 101 emits sound waves. The sound waves may be periodically emitted. When there is a gesture within a sensing range of the sensing sensor 101, the sensing sensor 101 may recognize a change, caused by the gesture, in a sound wave, for example, a change in a waveform or an amplitude. The gesture signal can be recognized based on the change. In other words, a gesture signal is a sound wave signal, and includes information such as a waveform or an amplitude of a sound wave.

The sensing sensor 101 transmits the sound wave signal to the processor 102. The processor 102 recognizes the gesture based on the gesture signal. The processor 102 may first perform at least one of the following processing on the sound wave signal: converting the received sound wave signal into an electrical signal, where the electrical signal is an analog signal; performing analog-to-digital conversion (analog-to-digital conversion, ADC) to convert the analog signal into a digital signal; and processing the digital signal.

Optionally, the processor 102 may include a signal processing module and another processing module. The signal processing module implements the foregoing processing of the sound wave signal. Alternatively, as shown in the dashed line part in FIG. 4, the processor 102 is connected to the signal processing module. The signal processing module connected to the processor 102 receives the sound wave signal of the sound wave sensor, and converts the received sound wave signal into an electrical signal, where the electrical signal is an analog signal; performs ADC, that is, converts the analog signal into a digital signal; processes the digital signal, and transfers the processed signal to the processor 102. This is not limited herein in this application.

The processor 102 may recognize the gesture based on the processed gesture signal. Various gestures can be made by a user within the sensing range of the sensing sensor 101. As shown in FIG. 4, when recognizing the gesture based on the gesture signal, the processor 102 may invoke a program stored in the memory 103 to recognize the gesture. The processor 102 outputs a control instruction corresponding to the gesture based on the recognized gesture. Optionally, the processor 102 controls different components of a computer system, such as a speaker, based on a control instruction corresponding to the recognized gesture. Alternatively, the processor 102 controls the electronic device and a related element of the electronic device based on the control instruction corresponding to the recognized gesture. In some cases, an external electronic device or an external handheld communication device may need to be connected by using a connection apparatus. The connection apparatus may be connecting by using a wired or wireless manner, such as a live wire, a USB, Bluetooth, or a RF.

In embodiments of this application, there is an association relationship between the gesture and the control instruction. In this embodiment of this application, an association relationship between a plurality of gestures and a plurality of control instructions may be stored in advance. Specifically, the association relationship may be stored in a local storage medium of the control apparatus 100, or may be stored in another remote storage medium instead of the local storage medium of the control apparatus 100.

One gesture may correspond to one control instruction. Certainly, a plurality of gestures may correspond to one control instruction. When the control apparatus senses any one of the plurality of gestures, the control instruction may be implemented. Alternatively, one gesture may correspond to a plurality of control instructions. When the control apparatus senses the gesture, the control apparatus may implement the plurality of control instructions corresponding to the gesture. For example, one gesture corresponds to switching to a next sound file and increasing volume. When sensing the gesture, the control apparatus determines to switch to the next sound file and increase volume of the next sound file.

In this embodiment of this application, the memory 103 may be a non-volatile memory such as a hard disk drive (hard disk drive, HDD) or a solid-state drive (solid-state drive, SSD), or may be a volatile memory (volatile memory) such as a random-access memory (random-access memory, RAM). The memory is any other medium that can carry or store expected program code in a form of an instruction or a data structure and that can be accessed by a computer, but is not limited thereto. The memory in embodiments of this application may alternatively be a circuit or any other apparatus that can implement a storage function, and is configured to store program instructions and/or data. Optionally, the association relationship between the gesture and the control instruction may be stored in the memory 103. The memory 103 may further store a program for the control instruction associated with the gesture. The program stored in the memory 103 may be an independent program, or may be a part of an operating system.

The processor 102 in this embodiment of this application may be a general-purpose processor, a digital signal processor, an application-specific integrated circuit, a field programmable gate array or another programmable logic component, a discrete gate or a transistor logic component, or a discrete hardware component. The general-purpose processor may be a microprocessor, any conventional processor, or the like.

After the processor 102 determines the control instruction associated with the gesture, the control instruction controls the sound playing device 104 to execute a corresponding operation. The sound playing device 104 may be a component of a computer system, and is located in a same device as the control apparatus 100. For example, the control apparatus 100 is disposed in a headset, and the sound playing device 104 is a speaker in the headset. Alternatively, the control apparatus 100 is connected to the sound playing device 104. For example, the control apparatus is disposed in a headset, and the sound playing device 104 is a related component or device in a tablet computer. The related element or device in the tablet computer is controlled by using the control instruction of the control apparatus in the headset to execute an operation related to the control instruction.

In a process of executing an operation indicated by the control instruction, the sound playing device 104 may provide feedback information to the user. The feedback information may be embodied in at least one aspect, such as audio, tactile sensation, or display. For example, the sound playing device 104 adjusts playing volume of a music player on a mobile phone based on the control instruction, and an interface that the volume is increased may be displayed on a screen of the mobile phone.

In embodiments of this application, any method may be used for recognizing a gesture based on a gesture signal. For example, in embodiments of this application, gesture recognition may be implemented in the following manner.

The user executes a gesture. The sensing sensor 101 emits a sound wave, and receives a sound wave signal of the gesture. The sensing sensor 101 transfers the sound wave signal to the processor 102, and the processor 102 converts the sound wave signal of the gesture into an electrical signal of the gesture, and converts the analog signal of the gesture into a digital signal of the gesture. The digital signal of the gesture may be displayed by using a gesture waveform. The gesture is recognized based on the digital signal.

The processor 102 converts the gesture signal (which may be a digital signal) into a set of features or a list of features. Each feature represents one input, for example, one feature represents one gesture. Generally, each feature may correspond to some information, including any one or more of the following: an identifier (ID), an x-axis time, a y-axis micro-Doppler frequency, or a z-axis amplitude. The information is used to represent a feature. For example, the first feature is represented by ID1, x1, y1, and z1, and the second feature is represented by ID2, x2, y2, and z2. Conversion from a gesture signal (for example, a digital signal of a gesture) to a feature may be implemented by using a digital signal processing algorithm.

The processor 102 performs feature classification and grouping. In a classification process, an identity or category of each feature is determined, for example, a feature of a finger, a palm, an arm, or another object. Once classified, a plurality of features can be grouped into corresponding feature groups. Locations of features in a feature group may be adjacent to each other, or features in a feature group may come from a same finger. Optionally, a grouping process may further include filtering. A part of the features that are not of a gesture event are filtered out by filtering. Filtering improves accuracy of gesture recognition.

The processor 102 determines a key parameter of a feature group, where the key parameter may include a distance between features, a centroid of the features, a feature rotation, a state transition, a feature movement rate, a feature movement direction, and the like. The key parameter of the feature group may be determined by a recognition algorithm.

The processor 102 can recognize the unique gesture after the foregoing process.

Optionally, if the gesture is a human gesture, the processor 102 may recognize the human gesture in the following manner.

A time sequence of data related to the human gesture is provided. The data of the time sequence is converted into a form (waveform) including a right-hand waveform and a left-hand waveform. Features are extracted from the waveform, where extracting steps include extracting a static feature from the waveform including a hand position and extracting a dynamic feature from the waveform, and include extracting a phase and a frequency from the right waveform and extracting a phase and a frequency from the left waveform. Based on the extracted features, the position, the phase, and the frequency of one or more hands in the waveform of the right hand and the position, the phase, and the frequency of one or more hands in the waveform of the left hand are combined into a rule describing the gesture, to recognize the gesture. A rule including features or combinations of features are used to uniquely identify a human gesture.

The foregoing description is based on the fact that the modules of the control apparatus 100 are implemented in a form of hardware. Optionally, the modules of the control apparatus 100 may be further implemented in a form of software.

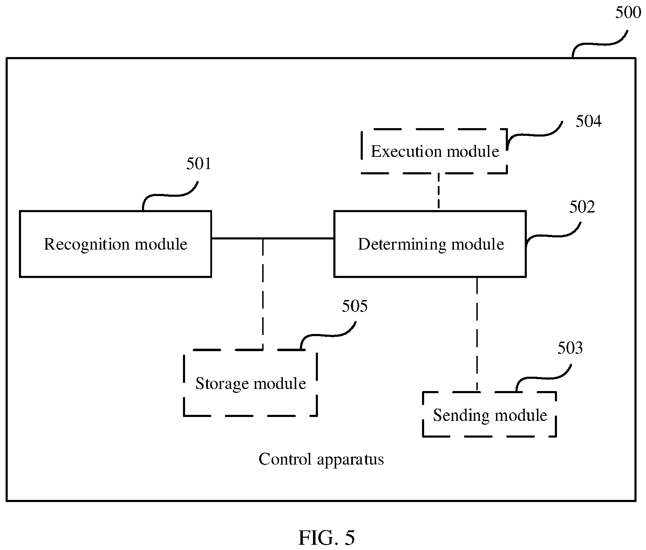

For example, as shown in FIG. 5, when the modules of the control apparatus are implemented in the form of software, the control apparatus 500 includes a recognition module 501 and a determining module 502.

The recognition module 501 is configured to recognize a gesture based on a gesture signal.

The determining module 502 is configured to determine a control instruction associated with the gesture, where the control instruction indicates a sound play operation.

Optionally, when recognizing the gesture based on the gesture signal, the recognition module 501 is configured to convert a sound wave signal into an electrical signal, and recognize the gesture based on the electrical signal.

In a possible design, the recognition module 501 may recognize the gesture in the following manner: performing feature classification and grouping. In a classification process, an identity or category of each feature is determined, for example, a feature of a finger, a palm, an arm, or another object. Once classified, a plurality of features can be grouped into corresponding feature groups. Locations of features in a feature group may be adjacent to each other or may come from a same finger. Optionally, a grouping process may include filtering. Apart of the features that are not of a gesture event are filtered out by filtering. Filtering improves accuracy of gesture recognition. The recognition module 501 determines a key parameter of a feature group. The key parameter includes a distance between features, a centroid of the features, a feature rotation, a state transition, a feature movement rate, a feature movement direction, and the like. The key parameter of the feature group may be determined by a recognition algorithm. The recognition module 501 can recognize the unique gesture after the foregoing process.

For operations executed by the recognition module 501 and the determining module 502, refer to corresponding operations executed by the processor 102.

The control apparatus 500 further includes a sending module 503. The sending module 503 is configured to send the control instruction to a sound playing device. Alternatively, the apparatus further includes an execution module 504, where the execution module 504 is configured to execute the sound play operation indicated by the control instruction. The sending module may send the control instruction in a wired or wireless manner. For an architectural relationship between the control apparatus 500 and the sound playing device, refer to the foregoing architectural relationship between the control apparatus 100 and the sound playing device 104.

Optionally, the control apparatus 500 may further include a storage module 505. For functions of the storage module 505, refer to the functions of the memory 103. Details are not described herein again.

The control apparatus may alternatively be implemented in a form of a combination of software and hardware. For example, a combination of hardware and software modules in the processor executes the foregoing operations executed by the processor.

With the control apparatus provided in this embodiment of this application, sound playing control can meet more application scenarios. The user does not need to touch an electronic device, a sound playing device or a component, and the user does not need to use voice input. Instead, the user can generate a control instruction by using a gesture, to control sound playing. More application scenarios are supported. For example, for some people with language disabilities, when it is inconvenient to input a control instruction by using voice, a gesture may be used to input a control instruction. When a control instruction is input by using a light sensor, there are many environmental restrictions of the light sensor, and the light sensor is easily interfered with by an ambient light signal. However, when a control instruction is input by using a gesture, environmental interference can be avoided, and playing control is more convenient and accurate. Compared with a method of inputting a control instruction by using a physical touch, a method of inputting a control instruction by using a gesture can avoid inconvenience resulting from a small size of a headset. The operation is more convenient.

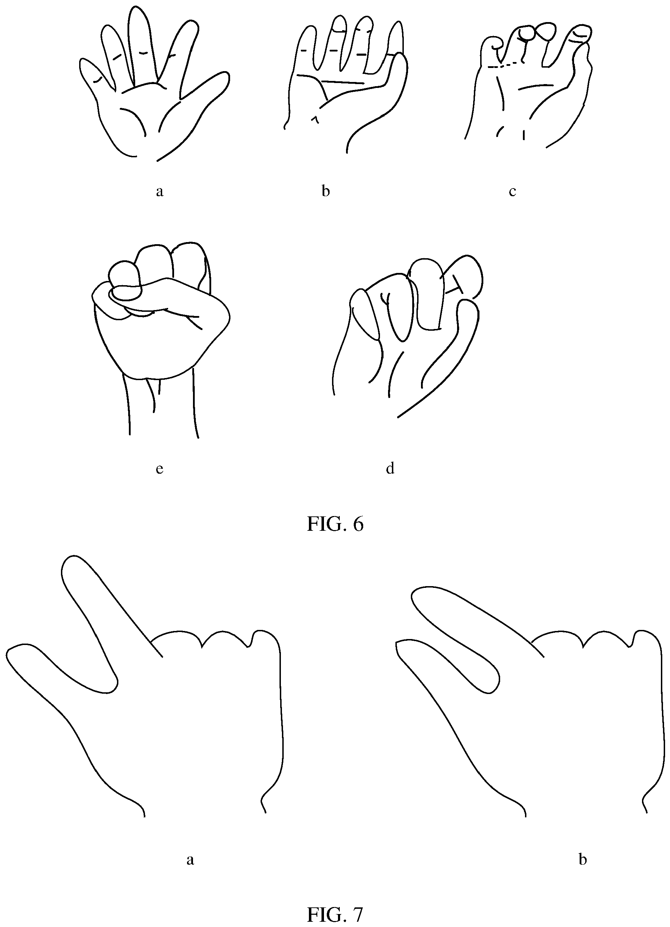

Examples of associations between gestures and control instructions are given below. When the sensor 101 recognizes a gesture in the following examples, the processor 102 may determine, by using the foregoing processing, a control instruction corresponding to the gesture. It may be understood that embodiments of this application are not limited to these gestures and corresponding control instructions. The gestures described below may be used in any combination. Each gesture may be a gesture formed by a left hand, or may be a gesture formed by a right hand. If the control apparatus is a headset, a gesture formed by a left hand may be used to control a left headset, a gesture formed by a right hand may control a right headset. Certainly, a gesture formed by any hand may control any headset.
(1) The gesture is clenching a fist, and the control instruction is to enable playing. Clenching a fist is to bend fingers toward the palm of the hand to form a fist. As shown in FIG. 6, figures in a sequence of a, b, c, d, and e represent gesture of clenching a fist.
(2) The gesture is opening a fist, and the control instruction is to turn off or stop playing. As shown in FIG. 6, figures in a sequence of e, d, c, b, and a represent gesture of opening a right hand fist.
(3) The gesture is bringing a thumb closer to another finger, and the control instruction is to enable playing. The another finger includes one or more of an index finger, a middle finger, a ring finger, or a little finger. As shown in FIG. 7, figures in a sequence from a to b indicate a gesture of bringing the thumb of the right hand to the index finger.

Bringing a thumb closer to another finger may be that the thumb is kept stationary and the another finger is brought closer to the thumb, that the another finger is kept stationary and the thumb is brought closer to the another finger, or that the thumb and the another finger are brought closer to each other.

In this gesture, the thumb may alternatively be any finger of another type.

(4) The gesture is bringing a thumb away from another finger, and the control instruction is to turn off or stop playing. The another finger includes one or more of an index finger, a middle finger, a ring finger, or a little finger. As shown in FIG. 7, figures in a sequence from b to a indicate a gesture of bringing the thumb of the right hand away from the index finger.

Bringing a thumb away from another finger may be that the thumb is kept stationary and the another finger is brought away from the thumb, that the another finger is kept stationary and the thumb is brought away from the another finger, or that the thumb and the another finger are brought closer away from each other.

In this gesture, the thumb may alternatively be any finger of another type.

Based on the gestures in (3) and (4), the fingers may be approaching until pinched, or may be approaching to a certain distance but not pinched. Similarly, bringing a finger away may start from a pinched state, or may start from a state that there is a certain distance but not pinched.

In a possible implementation, the gesture described in (3) may alternatively be associated with a control instruction for decreasing volume.

In a possible implementation, the gesture described in (4) may alternatively be associated with a control instruction for increasing volume.

For example, a larger distance between the fingers indicates larger volume, and a smaller distance indicates smaller volume. Pinching the fingers indicates a mute state.

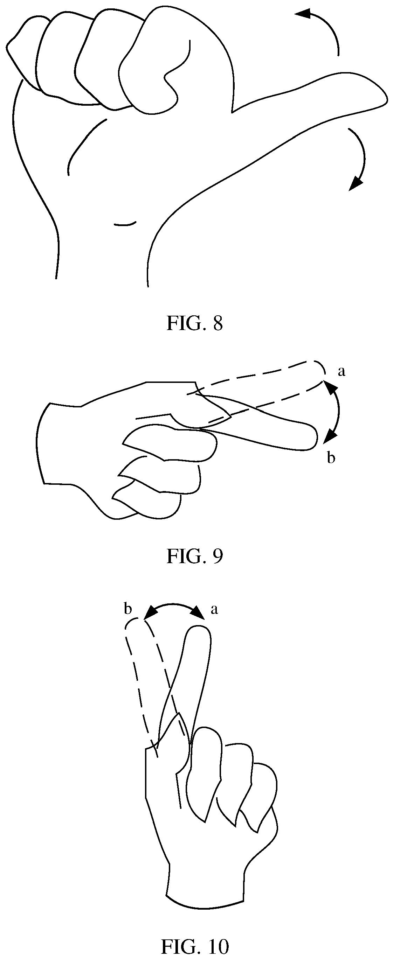

(5) The gesture is moving a finger upward, and the control instruction is to increase volume. The finger may be any one or more fingers. As shown in FIG. 8, an example of the thumb of the right hand is used. Movement in an upward direction of the arrow indicates a gesture of moving the finger upward.

(6) The gesture is moving a finger downward, and the control instruction is to decrease volume. The finger may be any one or more fingers. As shown in FIG. 8, an example of the thumb of the right hand is used. Movement in a downward direction of the arrow identifies a gesture of moving the finger downward.

(7) The gesture is moving a finger forward, and the control instruction is to increase volume. The finger may be any one or more fingers. As shown in FIG. 9, an example of a left index finger is used. Figures in a sequence from a to b indicate a forward movement gesture of the finger.

(8) The gesture is moving a finger backward, and the control instruction is to decrease volume. The finger may be any one or more fingers. As shown in FIG. 9, an example of a left index finger is used. Figures in a sequence from b to a indicate a backward movement gesture of the finger.

(9) The gesture is moving a finger leftward, and the control instruction is to increase volume. The finger may be any one or more fingers. As shown in FIG. 10, an example of a left index finger is used. Figures in a sequence from a to b indicate a leftward movement gesture of the finger.

(10) The gesture is moving a finger rightward, and the control instruction is to decrease volume. The finger may be any one or more fingers. As shown in FIG. 10, an example of a left index finger is used. Figures in a sequence from b to a indicate a rightward movement gesture of the finger.

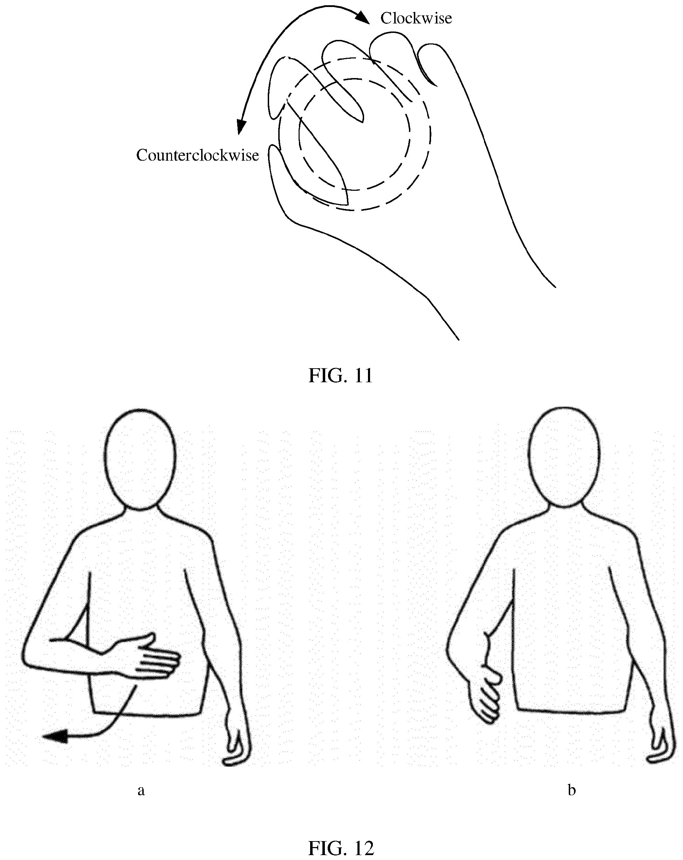

(11) The gesture simulates clockwise rotating of a physical knob, and the control instruction is to increase volume. As shown in FIG. 11, the gesture is implemented by clockwise rotating. During implementation of the gesture, it is assumed that a physical knob exists, and the gesture is represented by selecting the physical knob by using a hand. Certainly, the physical knob does not exist.

(12) The gesture simulates counterclockwise rotating of a physical knob, and the control instruction is to decrease volume. As shown in FIG. 11, the gesture is implemented by counterclockwise rotating.

(13) The gesture is swinging a forearm away from a body, and the control instruction is to switch to play a next sound file. As shown in FIG. 12, figures in a sequence from a to b represent the gesture of swinging the forearm away from the body.

(14) The gesture is swinging a forearm toward a body, and the control instruction is to switch to play a previous sound file. As shown in FIG. 12, figures in a sequence from b to a represent the gesture of swinging the forearm away from the body.

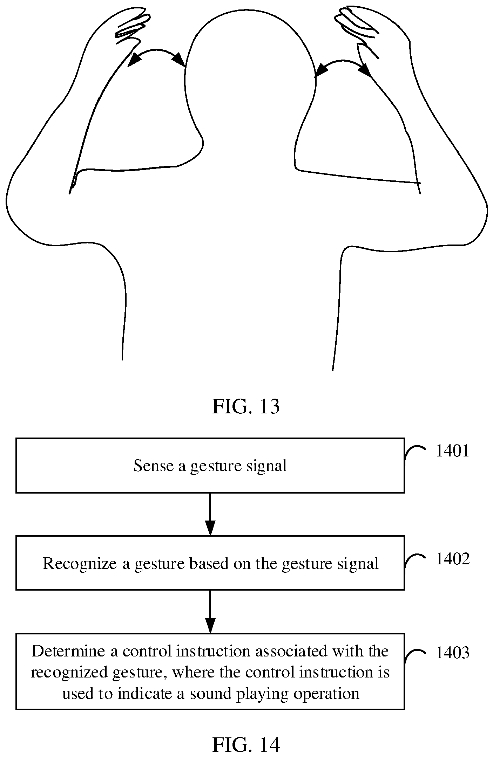

(15) As shown in Figure 13:
the gesture 1 is bringing a left hand closer to or away from a left ear, and the control instruction is to adjust volume of a left headset. For example, when the left hand is brought closer to the left ear, the volume of the left headset increases; and when a right hand is brought away from a right ear, volume of a right headset decreases.
the gesture 2 is bringing a right hand closer to or away from a right ear, and the control instruction is to adjust volume of a right headset.

The gesture 1 and the gesture 2 may be simultaneously executed, and movement directions of the gesture 1 and the gesture 2 may be the same or different. For example, the left hand is brought closer to the left ear and the right hand is brought closer to the left ear. For another example, the left hand is brought closer to the left ear, and the right hand is brought away from the left ear.

The gesture 1 and the gesture 2 are simultaneously executed, so that a stereo sound effect control instruction can be implemented.

The foregoing gestures are merely examples, and various control instructions may be implemented without limitation to the foregoing example gestures. For example, a gesture of bringing a finger closer to the control apparatus may be further executed, and the control instruction is to increase volume; and a gesture of bringing a finger away from the control apparatus may be executed, and the control instruction is to decrease volume.

In the foregoing gestures, the finger may point to any direction. Optionally, when the gesture is implemented, the finger may point to the control apparatus.

In conclusion, the gestures and the control instructions in the relationship between the gestures and the control instructions described above may be exchanged. For example, a gesture 1 is associated with a control instruction 1, and a gesture 2 is associated with a control instruction 2; alternatively, in embodiments of this application, the gesture 1 may be associated with the control instruction 2, and the gesture 2 may be associated with the control instruction 1. For example, if a finger moves upward, the control instruction is to increase volume; and if a finger moves downward, the control instruction is to decrease volume. For example, the gesture is swinging a forearm away from a body, and the control instruction is to switch to play a previous sound file; and the gesture is swinging a forearm toward the body, and the control instruction is to switch to play a next sound file.

Any two or more gestures described above may be combined to form a set of gesture control instructions.

Some or all of the operations and functions executed by the control apparatus 100 or the control apparatus 500 described in the foregoing method embodiments of this application may be implemented by using a chip or an integrated circuit.

To implement the functions of the control apparatus 100 or the control apparatus 500, an embodiment of this application further provides a chip, including a processor, configured to support the control apparatus 100 or the control apparatus 500 to implement the foregoing functions. In a possible design, the chip is connected to a memory or the chip includes a memory, and the memory is configured to store program instructions and data that are necessary for the communications apparatus.

An embodiment of this application provides a computer-readable storage medium, and the computer-readable storage medium stores a computer program. The computer program includes instructions for performing the method performed by the control apparatus 100 or the control apparatus 500.

An embodiment of this application provides a computer program product including instructions. When the computer program product is run on a computer, the computer is enabled to perform the method performed by the control apparatus 100 or the control apparatus 500.

Based on a same technical concept, as shown in FIG. 14, an embodiment of this application further provides a sound playing control method. The method may be executed by the foregoing control apparatus. A specific process of the method is as follows.

S1401: Sense a gesture signal, for example, sense a gesture signal by using a sensing sensor in a control apparatus. For a specific sensing process, refer to the detailed description in the foregoing apparatus embodiment, and details are not repeated herein.

S1402: Recognize a gesture based on the gesture signal. For example, a processor in the control apparatus recognizes the gesture based on the gesture signal. For a specific recognition process, refer to the detailed description in the foregoing apparatus embodiment. Details are not described herein again.

S1403: Determine a control instruction associated with the recognized gesture, where the control instruction indicates a sound play operation. For example, the processor in the control apparatus determines the control instruction associated with the recognized gesture.

Optionally, the control apparatus may further control a sound playing device based on the control instruction associated with the recognized gesture, for example, may send the control instruction to the sound playing device. After receiving the control instruction, the sound playing device executes a related sound play operation. For example, the control apparatus is a headset, the headset sends the control instruction to a mobile phone player, and the mobile phone player executes the control instruction. In addition, the control apparatus may further execute a corresponding sound play operation based on the control instruction associated with the recognized gesture. For example, the control apparatus is a headset, and the headset executes the control instruction, for example, to turn up or down the sound of a speaker of the headset.

For details of the specific method, refer to the foregoing description details of the control apparatus. Details are not repeatedly described.

A person skilled in the art should understand that embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, a CD-ROM, an optical memory, and the like) that include computer usable program code.

This application is described with reference to the flowcharts and/or block diagrams of the method, the device (system), and the computer program product according to embodiments of this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or the processor of any other programmable data processing device generate an apparatus for implementing a specific function in one or more processes in the flowcharts and/or in one or more blocks in the block diagrams.

These computer program instructions may be saved in a computer-readable memory that can indicate the computer or any other programmable data processing device to work in a specific manner, so that the instructions saved in the computer-readable memory generate an artifact that includes an instruction apparatus. The instruction apparatus implements a specific function in one or more processes in the flowcharts and/or in one or more blocks in the block diagrams.

These computer program instructions may be loaded onto a computer or another programmable data processing device, so that a series of operations and steps are executed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Although some embodiments of this application have been described, a person skilled in the art can make changes and modifications to these embodiments once the person skilled in the art learns of the basic inventive concept. Therefore, the following claims are intended to be construed as to cover the preferred embodiments and all changes and modifications falling within the scope of this application.

It is clear that a person skilled in the art can make various modifications and variations to embodiments of this application without departing from the scope of embodiments of this application. In this way, this application is intended to cover these modifications and variations of embodiments of this application provided that they fall within the scope of protection defined by the following claims and their equivalent technologies.

## Claims

1. A sound playing control method, wherein the method comprises:
sensing a gesture signal;
recognizing a gesture based on the gesture signal; and
determining a control instruction associated with the gesture, wherein the control instruction indicates a sound play operation.

2. The method according to claim 1, wherein the gesture signal comprises a sound wave signal.

3. The method according to claim 2, wherein the sensing a gesture signal comprises: sensing the gesture signal based on an ultrasonic Doppler effect.

4. The method according to any one of claims 1 to 3, wherein the control instruction is to enable playing, and the gesture is either of the following: clenching a fist, and bringing a thumb closer to another finger; and/or
the control instruction is to stop playing, and the gesture is either of the following: opening a fist, and bringing a thumb away from another finger, wherein
the another finger comprises one or more of an index finger, a middle finger, a ring finger, or a little finger.

5. The method according to any one of claims 1 to 4, wherein the control instruction is to increase volume, and the gesture is any one of the following: moving a finger upward, moving a finger forward, moving a finger leftward, or a gesture simulating clockwise rotating of a physical knob; and/or
the control instruction is to decrease volume, and the gesture is any one of the following: moving a finger downward, moving a finger backward, moving a finger rightward, or a gesture simulating counterclockwise rotating of a physical knob, wherein
the finger is any one or more of fingers.

6. The method according to any one of claims 1 to 5, wherein
the gesture is swinging a forearm away from a body, and the control instruction is to switch to play a next sound file; and/or
the gesture is swinging a forearm toward a body, and the control instruction is to switch to play a previous sound file.

7. The method according to any one of claims 1 to 6, wherein
the gesture is bringing a left hand closer to or away from a left ear, and the control instruction is to adjust volume of a left headset; and/or
the gesture is bringing a right hand closer to or away from a right ear, and the control instruction is to adjust volume of a right headset.

8. A control apparatus, comprising:
a sensing sensor, configured to sense a gesture signal; and
a processor, configured to recognize a gesture based on the gesture signal, and configured to determine a control instruction associated with the gesture, wherein the control instruction indicates a sound play operation.

9. The apparatus according to claim 8, wherein the gesture signal comprises a sound wave signal.

10. The apparatus according to claim 9, wherein the sensing sensor is specifically configured to sense the gesture signal based on an ultrasonic Doppler effect.

11. The apparatus according to any one of claims 8 to 10, wherein when the gesture is clenching a fist or bringing a thumb closer to another finger, the processor determines that the control instruction is to enable playing; and/or
when the gesture is opening a fist or bringing a thumb away from another finger, the processor determines that the control instruction is to stop playing, wherein
the another finger comprises one or more of an index finger, a middle finger, a ring finger, or a little finger.

12. The apparatus according to any one of claims 8 to 11, wherein when the gesture is any one of moving a finger upward, moving a finger forward, moving a finger leftward, or a gesture simulating clockwise rotating of a physical knob, the processor determines that the control instruction is to increase volume; and/or
when the gesture is any one of moving a finger downward, moving a finger backward, moving a finger rightward, or a gesture simulating counterclockwise rotating of a physical knob, the processor determines that the control instruction is to decrease volume, wherein
the finger is any one or more of fingers.

13. The apparatus according to any one of claims 8 to 12, wherein
when the gesture is swinging a forearm away from a body, the processor determines that the control instruction is to switch to play a next sound file; and/or
when the gesture is swinging a forearm toward a body, the processor determines that the control instruction is to switch to play a previous sound file.

14. The apparatus according to any one of claims 8 to 13, wherein
when the gesture is bringing a left hand closer to or away from a left ear, the processor determines that the control instruction is to adjust volume of a left headset; and/or
when the gesture is bringing a right hand closer to or away from a right ear, the processor determines that the control instruction is to adjust volume of a right headset.

15. A computer-readable storage medium, wherein the computer storage medium stores computer-readable instructions; and when the computer-readable instructions are run on a control apparatus, the control apparatus is enabled to perform the method according to any one of claims 1 to 7.

16. A chip, wherein the chip is connected to a memory, or the chip comprises the memory, and is configured to read and execute a software program stored in the memory, to implement the method according to any one of claims 1 to 7.
